(19) Europäisches Patentamt / European Patent Office / Office européen des brevets

(11) **EP 2 826 381 B1**

(12) **EUROPEAN PATENT SPECIFICATION**

(45) Date of publication and mention
of the grant of the patent:
**01.05.2019 Bulletin 2019/18**

(21) Application number: **13761552.2**

(22) Date of filing: **12.03.2013**

(51) Int Cl.:
***A23F 3/16*** (2006.01)

(86) International application number:
**PCT/JP2013/056852**

(87) International publication number:
**WO 2013/137269 (19.09.2013 Gazette 2013/38)**

(54) **BEVERAGE CONTAINING TEA-LEAF PECTIN**

GETRÄNK MIT TEEBLATTPEKTIN

BOISSON CONTENANT DE LA PECTINE DÉRIVÉE DE FEUILLES DE THÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2012 JP 2012054409**

(43) Date of publication of application:
**21.01.2015 Bulletin 2015/04**

(73) Proprietor: **Suntory Holdings Limited
Kita-ku, Osaka-shi
Osaka 530-8203 (JP)**

(72) Inventors:
• **HAYAKAWA, Satoshi
Kawasaki-shi
Kanagawa 211-0067 (JP)**
• **KOBAYASHI, Shinichi
Kawasaki-shi
Kanagawa 211-0067 (JP)**
• **NAGAO, Koji
Kawasaki-shi
Kanagawa 211-0067 (JP)**
• **YAMASHITA, Tatsunori
Kawasaki-shi
Kanagawa 211-0067 (JP)**

(74) Representative: **Vossius & Partner
Patentanwälte Rechtsanwälte mbB
Siebertstrasse 3
81675 München (DE)**

(56) References cited:
**EP-A1- 2 266 415          WO-A1-2009/116538
JP-A- 2004 159 665      JP-A- 2005 229 918
JP-A- 2010 239 869**

• **NOBUYUKI HAYASHI ET AL: "Reduction of
Catechin Astringency by the Complexation of
Gallate-Type Catechins with Pectin",
BIOSCIENCE BIOTECHNOLOGY
BIOCHEMISTRY., vol. 69, no. 7, 1 January 2005
(2005-01-01), pages 1306-1310, XP055230688,
TOKYO, JAPAN ISSN: 0916-8451, DOI:
10.1271/bbb.69.1306**
• **HIROFUMI MATSUO ET AL.: 'Astringency of
Kamairi-cha and Sen-cha' JOURNAL OF THE
JAPANESE SOCIETY FOR FOOD SCIENCE AND
TECHNOLOGY vol. 59, no. 1, January 2012, pages
6 - 16, XP008174706**

EP 2 826 381 B1

**Description**

TECHNICAL FIELD

The present invention relates to a beverage containing tea-leaf-derived pectin, and a method for producing the same.

BACKGROUND ART

In recent years, there have been developed and commercialized many packaged beverages packed in various containers such as cans and PET bottles. Among them, packaged tea beverages are generally prepared for sale by the following procedure: tea leaves are subjected to extraction with an aqueous solvent such as water to obtain a tea extract liquid, the concentration of the tea extract liquid is adjusted to give a drinking concentration, and then the resulting beverage is packed in a closed container such as can or PET bottle. Such packaged tea beverages are commonly sterilized through heating by a suitable method for the materials of the container, for the purpose of long-term storage, in other words for prevention of microbial contamination; however, this sterilization significantly deteriorates the good-quality flavor inherent in tea. In particular, there is a problem in that those who drink cooled packaged tea beverages find it difficult to perceive the good-quality flavor of tea but easy to perceive the bitterness and astringency of catechin compound. Another problem is that when packaged tea beverages are stored for a long time, there may be produced white stringy or flocculent solids like sediments, which can cause the packaged tea beverages to appear lacking in freshness if they are packed in transparent containers, leading to reduction in their commercial value.

Thus, there have been proposed various packaged tea beverages which retain their flavor inherent in tea even when drunk cold or hot, as well as have reduced sedimentation and/or creamdown even when stored for a long time. Examples include: a beverage containing catechin compound at a high concentration (300-2500 mg of catechin compound per 500 mL of the beverage), the beverage characterized in that the bitterness and astringency are mitigated by incorporating non-polymeric non-epimers and non-polymeric epimers at a specific ratio and adding a water-soluble polymer (e.g., the food additive pectin) (Patent Document 1); and a packaged beverage prepared by incorporating the dietary fiber pectin (0.005-1.3% by mass) in a beverage containing non-polymeric catechin compound (0.05-0.5% by mass), the packaged beverage characterized in that it provides a superior bitterness-reducing effect, retains the flavor inherent in the beverage, shows no sedimentation, and is superior in long-term storability (Patent Document 2).

There are other various reports about the influences of water-soluble pectin on tea beverages. One example is a report about tea-leaf-derived pectin (hereinafter also referred to as "tea-leaf pectin"), which states that the contents of catechin and water-soluble pectin in a tea extract are related to astringency -- astringency becomes more intense as the catechin content increases and the water-soluble pectin content decreases (Non-patent Document 1). Another report states that in an experiment using citrus-derived pectin, the astringencies of gallate-type catechin (epigallocatechin gallate and epicatechin gallate) were reduced by their complexing with pectin (Non-patent Document 2).

On the other hand, it is also reported that among beverages each containing catechin at a high concentration (0.01-1% by weight with respect to the beverage) and having water-soluble pectin, a polymer free of amine groups, being added thereto, the one having citrus pectin incorporated therein had no problem in appearance but was noticeably viscous and remained slightly bitter and astringent, while in the one having sugar beet pectin incorporated therein, the pectin was found to interact with catechin to form an insoluble complex, resulting in a product with an undesirable milky appearance (Patent Document 3).

Furthermore, since tea-leaf pectin is known as one of the causes for sedimentation, it is proposed that sedimentation in tea beverages be suppressed by reducing the content of a pectin substance in a tea extract liquid (Patent Documents 4 and 5).

EP 2266415 A1 discloses an agent for improving taste of tea drinks comprising glyceroglycolipid.

PRIOR ART DOCUMENTS

PATENT DOCUMENTS

Patent Document 1: Japanese Patent Application Publication No. JP 2002-238519
Patent Document 2: Japanese Patent Application Publication No. JP 2009-55906
Patent Document 3: Japanese Patent Application Publication No. JP 2011-234719
Patent Document 4: Japanese Patent Application Publication No. JP H06-311847
Patent Document 5: Japanese Patent Application Publication No. JP 2003-169641

NON-PATENT DOCUMENTS

Non-patent Document 1: Matsuo H., Fujita S., et al., "Analysis of Astringency of Kamairi-cha and Sen-cha", Nippon Shokuhin Kagaku Kogaku Kaishi, 2012, vol. 59, no. 1, p. 6-16

Non-patent Document 2: Hayashi N., Ujihara T., and Kohata K., "Astringency-Reducing Effect of the Formation of Pectin/Gallate-type Catechin Complexes", Yasai Chagyo Kenkyu Seika Joho, vol. 2005, p. 71-72

SUMMARY OF THE INVENTION

PROBLEMS TO BE SOLVED BY THE INVENTION

As described above, there are different findings about the influence of water-soluble pectin on the flavor of tea beverages, so it cannot necessarily be concluded that water-soluble pectin is effective for reducing bitterness and astringency. Further, the presence of tea-leaf pectin has to be said to be unfavorable for long-term storage.
An object of the present invention is to provide a packaged tea beverage which gives intense umami and kokumi tastes but has reduced astringency while being well balanced between an umami taste and astringency, as well as shows reduced sedimentation even when stored for a long time.

MEANS FOR SOLVING THE PROBLEMS

In order to solve the above-mentioned problems, the present inventors have studied the influence of tea-leaf pectin on flavor. As a result, we have found that in a tea beverage containing a specific amount of catechin compound, tea-leaf pectin is capable of enhancing the umami and kokumi tastes inherent in tea. We have also found that sedimentation attributed to tea-leaf pectin and other factors can be effectively reduced by adjusting the turbidity of the tea beverage containing tea-leaf pectin to lie within a specific range and incorporating a certain amount of glyceroglycolipid; thus, we have completed the present invention.
More specifically, the present invention relates, to the following:

(1) A packaged tea beverage comprising Components (a) to (c):

(a) 0.003-0.1 % of tea-leaf-derived pectin,
(b) 0.1-20 $\mu$g/mL of glyceroglycolipid, and
(c) 100-600 ppm of catechin compound,

wherein the packaged tea beverage has a turbidity (absorbance at the optical density of 680 nm) of 0.005-0.25; and
(2) The tea beverage as recited in (1), wherein the proportion of gallate-type catechin compound (c') in Component (c) [c'/c $\times$ 100(%)] is in the range of 40-95%.

ADVANTAGEOUS EFFECTS OF THE INVENTION

According to the present invention, there is provided a packaged tea beverage which gives intense umami and kokumi tastes but has reduced astringency while being well balanced between an umami taste and astringency, as well as shows reduced sedimentation even when stored for a long time. The tea beverage of this invention allows one to sufficiently enjoy a mild umami taste and a kokumi taste which are inherent in tea, even when drinking the tea beverage cold.

MODES FOR CARRYING OUT THE INVENTION

Tea beverage

For the purpose of the present invention, the tea beverage refers to: teas such as green tea, black tea, oolong tea, and puerh tea, which are produced mainly using the leaves and/or stems of the tea plant (also called by its scientific name, Camellia sinensis); blends of these teas with unpolished rice, barley or similar cereals, or any other various plant ingredients; or beverages of liquids extracted with an aqueous solvent from ingredients including mainly the leaves, stems, underground stems, roots, flowers, or fruits of other plants than the tea plant, or from blends of those ingredients.

The packaged tea beverage of the present invention encompasses not only tea beverages that are packed in various containers including cans, PET bottles, and paper containers and are made available for drinking purpose for a long time, but also beverages prepared from condensed tea extracts which are intended for use to prepare the above-mentioned beverages or for use by dilution at the time of drinking.

The tea beverage of the present invention encompasses non-fermented teas (e.g., green teas), semi-fermented teas (e.g., oolong tea), and fermented teas (e.g., black tea). To be specific, the inventive tea beverage can be exemplified by various kinds of teas, including: steamed non-fermented teas (green teas) such as Sencha, Bancha, Hojicha, Gyokuro, Kabusecha, and Tencha; non-fermented teas including Kamairicha (pot-roasted green teas) such as Ureshinocha, Aoyagicha, and Chinese teas; semi-fermented teas such as Hoshucha, Tekkannon tea, and oolong tea; and fermented teas such as black tea, Awa-bancha, and puerh tea. The part of the tea plant to be extractedis not limited at all as long as it can be used to extract drinkable tea -- leaves, stems, and/or other parts can be used as appropriate. The form of the part to be used is also not limited -- big leaves, powder, and any other forms are fine.

The effects of the present invention can be remarkably perceived particularly in green tea beverages prepared using a green tea extract liquid as a main component; therefore, green tea is one of the preferred modes of this invention. Examples of green tea include Sencha, Bancha, Gyokuro, Tencha and Kamairicha.

Active ingredients

The packaged tea beverage of the present invention comprises a specific amount of catechin compound, as well as tea-leaf pectin (Component (a)) and glyceroglycolipid (Component (b)). In the tea beverage of this invention, the tea-leaf pectin and the glyceroglycolipid cooperatively act on each other, thereby functioning both as active ingredients, more specifically as a bitterness-reducing agent and/or a kokumi taste enhancer. The glyceroglycolipid also efficiently enhances the storage stability of the tea-leaf pectin.

In the tea beverage of the present invention, Component (a) is incorporated so as to ensure that the content by weight of this component with respect to the weight of the tea beverage is in the range of 0.003-0.1%, preferably 0.003-0.02%. When the tea-leaf pectin is present in an amount of greater than 0.1%, there may be cases where sedimentation cannot be suppressed even by incorporating the glyceroglycolipid. On the other hand, when the tea-leaf pectin is present only in an amount of smaller than 0.003%, there may be cases where the kokumi taste enhancing effect of the tea-leaf pectin cannot be perceived sufficiently. As referred to herein, the "kokumi taste" is a term used in the flavor industry to represent various characteristics including continuity, mouthfulness, richness and thickness, and can be clearly detected and distinguished through sensory evaluation by trained panelists (hereinafter referred to as "specialized panelists"). In the tea beverage of this invention, the tea-leaf pectin can give an umami (kokumi) taste accompanied with a continuous feeling of thickness, and can allow ones to perceive a thick taste and a feeling of robustness that can be perceived at the end of drinking in a tea brewed in a teapot using high-grade tea leaves.

Component (b) is incorporated so as to ensure that the content by weight of this component with respect to the tea beverage is in the range of 0.1-20 $\mu$g/mL, preferably 0.1-15 $\mu$g/mL, more preferably 0.1-10 $\mu$g/mL, particularly preferably 0.1-5 $\mu$g/mL. When the content of this component falls within the above-mentioned range, the glyceroglycolipid cooperatively acts on the tea-leaf pectin, so that an umami taste accompanied with a feeling of thickness can be perceived not only at the end of drinking but also in the middle of drinking, in other words while the tea beverage is in the mouth. When the glyceroglycolipid is present only in an amount of smaller than 0.1 $\mu$g/mL, no kokumi taste can be perceived either in the middle or at the end of drinking even if the content of Component (a) falls within its preferred range, so that no tea beverage can be provided which has a good balance between astringency and an umami taste.

In order to incorporate Components (a) and (b) at specific concentrations as mentioned above, a tea extract liquid rich in the tea-leaf pectin (hereinafter referred to as "tea extract A") and a solution rich in the glyceroglycolipid (hereinafter referred to as "extract B" or, if it is a tea extract liquid, as "tea extract B") are mixed with a tea-leaf (e.g., green tea) extract liquid serving as a main component, to thereby produce a tea beverage.

Tea extract A can be prepared by subjecting tea leaves generally regarded as high-grade tea leaves, such as Gyokuro and Matcha, to an extraction treatment with an aqueous solvent such as water. The extraction conditions (e.g., temperature, time) can be set as appropriate by those skilled in the art depending on the type of the tea leaves to be used. One preferred example of the conditions for extraction of Sencha is an extraction with water at about 70-100°C (preferably at 80-95°C). In the process of such an extraction, the efficiency of extraction may also be improved by, for example, performing a preliminary treatment such as adding an acid to an extraction solvent to form an acidic solvent or pulverizing tea leaves.

The present inventors have found that a tea extract obtained by treating and extracting tea leaves with a cellulase having little pectinase activity (hereinafter referred to as the "enzymatically treated extract") contains tea-leaf pectin at a high concentration. This enzymatically treated extract can be mentioned as an example of preferred modes of tea extract A of this invention. The enzymatically treated extract is prepared preferably using a cellulase having substantially no pectinase activity. To be specific, this extract is prepared using a cellulase which not only has a cellulase titer of at least 50 units/g, preferably at least 100 units/g, more preferably at least 200 units/g, but also has as little pectinase activity as possible. The cellulase activity of one unit is defined as follows: one unit is the amount of cellulase that acts on sodium carboxymethyl cellulose at 37°C and causes a reducing capacity corresponding to glucose of 1 µmol per minute during early reaction stage. The pectinase activity is tested by the procedure mentioned below. If the relative proportion of the viscosity of the resulting test solution relative to that of an untreated pectin solution (viscosity proportion) is at least 80%, preferably at least 85%, more preferably at least 90%, still more preferably at least 95%, the cellulase used in that test solution can be used for extraction. Test procedure: the test solution contains 0.5 wt% pectin, and is prepared with an acetate buffer of pH 5.4; the cellulase is added to the test solution such that the cellulase is 1 wt% relative to the pectin in the solution; a reaction of the cellulase is carried out at 37°C for 16 hours; the resulting solution is treated at 90°C for 10 minutes to deactivate the enzyme; and then viscosity of the deactivated solution is measured with a tuning-fork vibration viscometer at 24.5°C to determine the viscosity proportion relative to the untreated pectin solution (the test solution before the treatment with the cellulase). Preferred examples of the cellulase having little contaminant pectinase activity include cellulases derived from the genus Tricoderma, such as Cellulase Amano T4 (Amano Enzyme Inc.) and Sumizyme C (Shin Nihon Chemical Co. Ltd.). Since this enzymatically treated extract has a good flavor, shows no sedimentation, creamdown or other problems, and is superior in appearance, it can be directly incorporated as tea extract A in the tea beverage of this invention without any special posttreatment. Additionally, this tea extract may be used in an as-is (liquid) form or in the form of being pulverized by a suitable method such as freeze drying or spray drying.

For the purpose of the present specification, the glyceroglycolipid of Component (b) refers to glycolipids in which a sugar chain composed of one to three monosaccharides is glycoside-bonded to the hydroxyl group of diacylglycerol. Examples of Component (b) include monogalactosyl diglyceride (MGDG) and digalactosyl diglyceride (DGDG). As extract B, use can be made of a solution synthesized by a conventional method or a commercially available compound; however, using a natural solution (extract) rich in glyceroglycolipid as extract B is preferred from the viewpoint of flavor, and it is particularly preferable to use a glyceroglycolipid-rich tea extract from tea leaves, or a roughly purified or purified product thereof (tea extract B). Tea extract B can be prepared by, for example, subjecting tea leaves that have undergone a pulverization step for destroying cell walls as by stone mill grinding, to extraction with water or the like to elute a cell membrane component (refer to Japanese Patent Domestic Re-publication No. JP 2009-116538).

Meanwhile, in the tea beverage of the present invention, it is important to adjust the catechin compound content to lie within the range of 0.01-0.06% (100-600 ppm), preferably 0.02-0.05% (200-500 ppm), with respect to the weight of the tea beverage. When the catechin compound content exceeds 600 ppm, there may be cases where one may feel irritating bitterness or astringency but cannot perceive mouthfulness imparted by a cooperative action of the tea-leaf pectin and glyceroglycolipid of this invention, when he/she puts the tea beverage in the mouth. Also, when the catechin compound content exceeds 600 ppm, the storage stability of the tea beverage may be damaged by interaction with the pectin and the like. On the other hand, when the catechin compound content falls short of 100 ppm, there may be cases where one cannot perceive tea's inherent umami taste, in other words an umami taste accompanied with a continuous feeling of thickness, which he/she should be able to enjoy while he/she puts the tea beverage in the mouth (in the middle of drinking). For the purpose of the present specification, the term "catechin compound" is a generic name for catechin, epicatechin, gallocatechin, epigallocatechin, catechin gallate, epicatechin gallate, gallocatechin gallate, and epigallocatechin gallate. Additionally, for the sake of confirmation, the above-mentioned content refers to the total amount of these compounds.

The composition of the catechin compound is not particularly limited. However, even when the tea-leaf pectin and glyceroglycolipid of the present invention are used with the gallate-type catechin compound (this term is a generic name particularly used for catechin gallate, epicatechin gallate, gallocatechin gallate, and epigallocatechin gallate) which is considered to have particularly intense bitterness and astringency, the tea-leaf pectin and glyceroglycolipid can take significant effect on this type of catechin compound and produce a tea beverage with an appropriate balance between an umami taste and astringency. Therefore, a tea beverage containing a high proportion of the gallate-type catechin compound can also be mentioned as one of the preferred modes of the present invention. To be specific, the proportion of the gallate-type catechin compound in the catechin compound ([mass of gallate-type catechin compound]/[mass of all catechin compound] $\times$ 100%) is in the range of about 40-95%, preferably about 45-90%, more preferably about 46-80%.

The catechin compound content can be adjusted by mixing a tea-leaf (e.g., green tea) extract liquid serving as a main component with tea extract A and/or tea extract B mentioned above and optionally adding a condensed tea-leaf extract of green tea (e.g., commercially available "Polyphenon" (Mitsui Norin Co., Ltd.), "Teaflan" (ITO EN, Ltd.), and "Sunphenon" (Taiyo Kagaku Co., Ltd.)). In many cases, the proportion of the gallate-type catechin compound falls within the above-mentioned range without any particular treatment for adjusting the same.

In the packaged tea beverage of the present invention, it is important to adjust the turbidity (absorbance at the optical density of 680 nm) to fall

within the range of 0.005-0.25, preferably within the range of 0.010-0.20, more preferably within the range of 0.05-0.2. When the turbidity exceeds 0.25, there may be cases where one cannot perceive a thick taste or a feeling of robustness which are inherent in the tea beverage, at the end of drinking, and may feel an unfavorable savor such as a powdery aftertaste. Also, when the turbidity exceeds 0.25, the storage stability of the tea beverage may be damaged by interaction with the pectin and the like. The turbidity can be adjusted by subjecting the respective ingredients of the packaged tea beverage, or a liquid preparation obtained by mixing said ingredients, to a fine filtration step. The term "fine filtration" refers to a step of filtration (separation) for removing a substance approximately sized 1 μm or more, and can be exemplified by filtration with diatomaceous earth, filtration using a filter, MF membrane filtration, UF membrane filtration, and centrifugation, with centrifugation being particularly preferred from the viewpoint of flavor.

To the packaged tea beverage of the present invention, various additives may also be added alone or in combination, such as antioxidants, emulsifiers, preservatives, pH adjustors, flavoring agents, seasonings, sweeteners, acidifiers, and quality stabilizers. From the viewpoint of flavor, more specifically the characteristic in that the flavor inherent in tea can be enjoyed, it is preferred that no flavoring agent, seasoning, sweetener, acidifier, or the like be added, and from the viewpoint of storage stability, it is preferred that the pH be adjusted to the range of 5.0-7.0.

EXAMPLES

For the purpose of this invention, all numerical ranges given herein include their endpoints.

<Example 1>

1. Production of tea beverages

(1) Preparation of a tea extract rich in pectin (tea extract A)

Ten grams of green tea leaves (weakly roasted) were put in a closed container equipped with an agitator, and 180 mL of ion exchange water at 40°C was added to soak the green tea leaves. To the liquid was added 0.2 g of a cellulase preparation ("Sumizyme C" produced by Shin Nihon Chemical Co. Ltd.), and with the temperature kept at 40°C, the mixture was stirred for 16 hours to perform enzymatic treatment. Thereafter, the resulting enzymatically treated liquid was heated at 90°C for 10 minutes to inactivate the enzyme, whereupon tea extract A was obtained.

(2) Preparation of an tea extract rich in glyceroglycolipid (tea extract B)

Two hundred milliliters of warm water (35°C) was added to 0.4 g of tea leaves that had been ground on a stone mill, and the liquid was left to stand for 5 minutes and then centrifuged to separate and remove solids of relatively large particle size. Then, the filtrate was further passed at room temperature through a membrane filter (pore size, 0.45 μm; Juji Field Inc.; non-sterile filter 13A for aqueous samples) to remove insoluble solids, whereupon tea extract B was obtained.

(3) Production of tea beverages

Seven grams of Sencha tea leaves were subjected to extraction with 200 mL of hot water (90°C) for 5 minutes, and solid-liquid separation was conducted to obtain a tea extract liquid (hereinafter referred to as the "base extract liquid") as a base ingredient for producing tea beverages. To the base extract liquid, tea extracts A and B which had been prepared in (1) and (2) above were added so as to produce tea beverages each containing the respective components in the proportions specified in Table 1. After sterilization by UHT, 500 mL each of the tea beverages were bottled in containers (PET bottles).

(4) Evaluation

The produced tea beverages were subjected to sensory evaluation by (five) specialized panelists. The evaluation was conducted from the viewpoints of the strength of astringency/bitterness and the strength of kokumi taste (○: well balanced between kokumi taste and astringency; Δ: somewhat balanced between kokumi taste and astringency; and ×: poorly balanced between kokumi taste and astringency), at the beginning of drinking (immediately after a beverage was put in the mouth), in the middle of drinking (while the beverage is in the mouth for several seconds), and at the end of drinking (immediately after the beverage was swallowed). The tea beverages were also tested for storage stability by the following procedure: the tea beverages were stored at 55°C for two weeks and then visually evaluated for sedimentation and creamdown (○: no sedimentation at all; Δ: slight sedimentation; and × : heavy sedimentation).

The thus-obtained tea beverages were subjected to further analysis of their various components by the method described below in section 2. Furthermore, the tea beverages were determined for turbidity (absorbance at the optical density of 680 nm) using the Shimadzu UV-1600 UV-visible Spectrophotometer (with square cells of 10 mm path length) produced by Shimadzu Corporation.

2. Analysis method

(i) Determination of pectin

The determination of pectin was made by performing a preliminary treatment of the samples to prepare test liquids for determining soluble pectin and by determining the galacturonic acid amount according to the m-hydroxydiphenyl method. To be specific, 80v/v% ethanol was added to 0.25-1 g of a sample, and the mixture was heated to reflux in an air-cooled tube at 80°C for one hour. Then, the mixture was passed through glass fiber filter paper, and the retained residues were washed with 80v/v% ethanol. To the washed residues, water was added, and the mixture was heated to reflux in an air-cooled tube for one hour and then passed through glass fiber filter paper. The filtrate was cooled and diluted to a specific volume to prepare a test liquid for determining soluble pectin. The resulting galacturonic acid amount was quantified by the m-hydroxydiphenyl method. In the process of the quantification using m-hydroxydiphenyl, the amount of soluble pectin was calculated according to the following equation using 0.91 as a correction factor. (Galacturonic acid was used as a reference standard.)

$$\text{Soluble pectin amount} = \text{galacturonic acid amount} \times 0.91$$

(ii) Determination of glyceroglycolipid

Each of the samples was filtrated under pressure using an ultrafiltration membrane (Millipore Corporation; Biomax Ultrafiltration Discs, PBMK, polyethersulfone, 300,000 NMWL), and the residues retained on the membrane were collected to obtain a fraction with a molecular weight of 300000 or greater. The resulting fraction was dissolved in water, and the solution was acidified with HCl and distributed into two liquid phases using ethyl acetate. Among the two phases, the ethyl acetate phase was adsorbed on an ODS solid-phase extraction cartridge (Waters Corporation; Sep-Pak Plus C18) and subjected to fractionation and elution using a water/ethanol mixed solvent while the ethanol concentration was varied in succession. Among the resulting fractions, the one fractionated on ODS with 100% ethanol was subjected to reverse phase chromatography to conduct quantitative analysis of glyceroglycolipid. The analysis conditions are as follows.

| | |
|---|---|
| Reverse phase column: | TSK-GEL (Tosoh Corporation; ID 4.6 mm $\times$ L 150 mm) |
| Sample injection volume: | 10 $\mu$L |
| Flow rate: | 1.0 mL/min. |
| RI detector: | Shimadzu RIA-10A |
| Eluant: | 95% methanol |
| Temperature: | 40°C |

(iii) Determination of catechin compound

The catechin compound was determined by HPLC. The specific determination procedure is as follows.

| | |
|---|---|
| HPLC system: | Tosoh HPLC System LC8020 model II |
| Column: | TSKgel ODS80T sQA (4.6 mm $\times$ 150 mm) |
| Column temperature: | 40°C |
| Mobile phase A: | Water:acetonitrile:trifluoroacetic acid (90:10:0.05) |
| Mobile phase B: | Water:acetonitrile:trifluoroacetic acid (20:80:0.05) |
| Detection: | UV 275 nm |
| Injection volume: | 20 $\mu$L |
| Flow rate: | 1 mL/min. |

Gradient program:

| Time (min.) | %A | %B |
|---|---|---|
| 0 | 100 | 0 |
| 5 | 92 | 8 |
| 11 | 90 | 10 |
| 21 | 90 | 10 |
| 22 | 0 | 100 |
| 29 | 0 | 100 |
| 30 | 100 | 0 |

Reference materials: Catechin, epicatechin, gallocatechin, epigallocatechin, catechin gallate, epicatechin gallate, gallocatechin gallate, and epigallocatechin gallate (high-purity reagents produced by Kurita Analysis Service Co., Ltd.)

The results are shown in Table 1. In this table, the contents of tea-leaf pectin, glyceroglycolipid ("Glycero") and catechin compound are expressed in %, $\mu$g/mL, and ppm, respectively. The packaged tea beverages, which satisfied all of the following requirements: tea-leaf pectin content, 0.003-0.1%; glyceroglycolipid content, 0.1-20 $\mu$g/mL; catechin compound content, 100-600 ppm; and turbidity (absorbance at the optical density of 680 nm), 0.005-0.25, gave intense umami and kokumi tastes but had reduced astringency while being well balanced between an umami taste and astringency, as well as showed reduced sedimentation even when stored for a long time.

[Table 1]

| | 1 | 2 | 3 | 4 | 5 | 6 | 7 | 8 |
|---|---|---|---|---|---|---|---|---|
| Catechin compound | 80 | 80 | 80 | 80 | 110 | 110 | 110 | 110 |
| OD680 | 0.002 | 0.006 | 0.24 | 0.27 | 0.002 | 0.006 | 0.24 | 0.27 |
| Pectin | 0.052 | 0.052 | 0.052 | 0.052 | 0.052 | 0.052 | 0.052 | 0.052 |
| Glycero | 10 | 10 | 10 | 10 | 10 | 10 | 10 | 10 |
| Beginning of drinking | △ | △ | △ | △ | △ | ○ | ○ | △ |
| Middle of drinking | × | × | × | × | △ | ○ | ○ | △ |
| End of drinking | × | △ | ○ | × | × | ○ | ○ | × |
| Storage stability | ○ | ○ | ○ | × | ○ | ○ | ○ | × |

| | 9 | 10 | 11 | 12 | 13 | 14 | 15 | 16 |
|---|---|---|---|---|---|---|---|---|
| Catechin compound | 590 | 590 | 590 | 590 | 620 | 620 | 620 | 620 |
| OD680 | 0.002 | 0.006 | 0.24 | 0.27 | 0.002 | 0.006 | 0.24 | 0.27 |
| Pectin | 0.052 | 0.052 | 0.052 | 0.052 | 0.052 | 0.052 | 0.052 | 0.052 |
| Glycero | 10 | 10 | 10 | 10 | 10 | 10 | 10 | 10 |
| Beginning of drinking | △ | ○ | ○ | △ | × | × | × | × |
| Middle of drinking | △ | ○ | ○ | △ | △ | △ | △ | △ |
| End of drinking | × | ○ | ○ | × | × | △ | ○ | × |
| Storage stability | ○ | ○ | ○ | × | ○ | ○ | ○ | × |

| | 17 | 18 | 19 | 20 | 21 | 22 | 23 | 24 |
|---|---|---|---|---|---|---|---|---|
| Catechin compound | 350 | 350 | 350 | 350 | 350 | 350 | 350 | 350 |
| OD680 | 0.130 | 0.130 | 0.130 | 0.130 | 0.130 | 0.130 | 0.130 | 0.130 |
| Pectin | 0.001 | 0.001 | 0.001 | 0.001 | 0.003 | 0.003 | 0.003 | 0.003 |
| Glycero | 0.050 | 0.1 | 20 | 25 | 0.050 | 0.1 | 20 | 25 |
| Beginning of drinking | △ | △ | △ | △ | △ | ○ | ○ | △ |
| Middle of drinking | × | △ | △ | × | × | ○ | ○ | × |
| End of drinking | × | × | × | × | △ | ○ | ○ | △ |
| Storage stability | △ | ○ | ○ | ○ | △ | ○ | ○ | ○ |

| | 25 | 26 | 27 | 28 | 29 | 30 | 31 | 32 |
|---|---|---|---|---|---|---|---|---|
| Catechin compound | 350 | 350 | 350 | 350 | 350 | 350 | 350 | 350 |
| OD680 | 0.130 | 0.130 | 0.130 | 0.130 | 0.130 | 0.130 | 0.130 | 0.130 |
| Pectin | 0.100 | 0.100 | 0.100 | 0.100 | 0.105 | 0.105 | 0.105 | 0.105 |
| Glycero | 0.050 | 0.1 | 20 | 25 | 0.050 | 0.1 | 20 | 25 |
| Beginning of drinking | △ | ○ | ○ | △ | △ | △ | △ | △ |
| Middle of drinking | × | ○ | ○ | × | × | △ | △ | × |
| End of drinking | △ | ○ | ○ | △ | × | × | × | × |
| Storage stability | △ | ○ | ○ | ○ | × | × | × | × |

**Claims**

1. A packaged tea beverage comprising Components (a) to (c):

    (a) 0.003-0.1% of tea-leaf-derived pectin,
    (b) 0.1-20 $\mu$g/mL of glyceroglycolipid, and
    (c) 100-600 ppm of catechin compound,

    wherein the packaged tea beverage has a turbidity (absorbance at an optical density of 680 nm) of 0.005 - 0.25.

2. The tea beverage according to Claim 1, wherein a proportion of gallate-type catechin compound (c') in Component (c) [c'/c $\times$ 100(%)] is in the range of 40-95%.

**Patentansprüche**

1. Ein abgepacktes Teegetränk, umfassend die Komponenten (a) bis (c):

    (a) 0,003 - 0,1% von Teeblättern abgeleitetes Pektin,
    (b) 0,1 - 20 $\mu$g/mL von Glyceroglycolipid, und
    (c) 100 - 600 ppm Catechinverbindung,

    wobei das abgepackte Teegetränk eine Trübung (Absorption bei einer optischen Dichte von 680 nm) von 0,005 - 0,25 aufweist.

2. Das Teegetränk nach Anspruch 1, wobei ein Anteil der gallatartigen Catechinverbindung (c') in Komponente (c) [c'/c $\times$ 100(%)] im Bereich von 40 - 95% liegt.

**Revendications**

1. Boisson au thé sous emballage comprenant les composants (a) à (c) :

    (a) 0,003 à 0,1 % de pectine dérivée de feuilles de thé,
    (b) 0,1 à 20 $\mu$g/ml de glycéroglycolipide, et
    (c) 100 à 600 ppm de composé de catéchine,

    laquelle boisson au thé sous emballage a une turbidité (absorbance à une densité optique de 680 nm) de 0,005 à 0,25.

2. Boisson au thé sous emballage selon la revendication 1, dans laquelle la proportion de composé de catéchine de type gallate (c') dans le composant (c) [c'/c x 100 (%)] est comprise dans la plage allant de 40 à 95 %.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2266415 A1
- JP 2002238519 A
- JP 2009055906 A
- JP 2011234719 A
- JP H06311847 B
- JP 2003169641 A
- JP 2009116538 A

**Non-patent literature cited in the description**

- **MATSUO H. ; FUJITA S. et al.** Analysis of Astringency of Kamairi-cha and Sen-cha. *Nippon Shokuhin Kagaku Kogaku Kaishi,* 2012, vol. 59 (1), 6-16
- **HAYASHI N. ; UJIHARA T. ; KOHATA K.** Astringency-Reducing Effect of the Formation of Pectin/Gallate-type Catechin Complexes. *Yasai Chagyo Kenkyu Seika Joho,* vol. 2005, 71-72